# NEUE EUROPÄISCHE PATENTSCHRIFT

(11) **EP 2 566 632 B2**
(45) Veröffentlichungstag und Bekanntmachung des Hinweises auf die Entscheidung über den Einspruch: **06.03.2019**
(45) Hinweis auf die Patenterteilung: 19.03.2014
(21) Anmeldenummer: 11717267.6
(22) Anmeldetag: 28.04.2011
(51) Int. Cl.: B08B 3/02, C23G 3/00

(54) **ANLAGE UND VERFAHREN ZUM REINIGEN UND/ODER ENTGRATEN VON WERKSTÜCKEN**
INSTALLATION AND METHOD FOR CLEANING AND/OR DEBURRING WORKPIECES
INSTALLATION ET PROCÉDÉ DE NETTOYAGE ET/OU D'ÉBAVURAGE DE PIÈCES

(30) Priorität: 03.05.2010 DE 102010028489
(43) Veröffentlichungstag der Anmeldung: 13.03.2013
(73) Patentinhaber: Ecoclean GmbH, 70794 Filderstadt (DE)
(72) Erfinder: DAVID, Hermann-Josef, 52156 Monschau (DE); KÄSKE, Egon, 52078 Aachen (DE)
(74) Vertreter: Hoeger, Stellrecht & Partner Patentanwälte mbB
(86) Internationale Anmeldenummer: PCT/EP2011/056765
(87) Internationale Veröffentlichungsnummer: WO 2011/138230

(56) Entgegenhaltungen:
- EP-A1- 1 323 482
- EP-A2- 0 114 424
- WO-A1-98/33605
- DE-A1- 2 922 213
- DE-A1- 4 220 927
- DE-A1- 4 243 868
- DE-A1- 4 341 020
- US-A1- 2003 136 424
- US-A1- 2006 201 536
- US-B1- 6 215 268
- US-B1- 6 321 760

## Beschreibung

Die vorliegende Erfindung betrifft eine Anlage zum Reinigen und/oder Entgraten von Werkstücken, welche einen Behandlungsbereich, in dem eine Reinigungsbehandlung und/oder eine Entgratungsbehandlung an einem Werkstück durchführbar ist, eine Beladevorrichtung zum Überführen des Werkstücks aus einem Außenraum der Anlage in den Behandlungsbereich und eine Entladevorrichtung zum Überführen des Werkstücks aus dem Behandlungsbereich in den Außenraum der Anlage umfasst.

Bekannte Anlagen zum Reinigen von Werkstücken werden beispielsweise dazu verwendet, bei der mechanischen Bearbeitung von Motorenkomponenten, insbesondere Zylinderköpfen, durch Späne und Kühlschmierstoffe entstehende Verunreinigungen prozesssicher von den Werkstücken, insbesondere von den Zylinderköpfen, zu entfernen, damit die Verunreinigungen nicht bei nachfolgenden Montageprozessen stören und später zu Motorschäden führen können.

Reinigungsanlagen, die zum Entfernen solcher Verunreinigungen eingesetzt werden, umfassen häufig ein integriertes Handhabungssystem, beispielsweise einen Roboter. Zur Beladung und Entladung der Reinigungsanlage mit Werkstücken ist es bekannt, einen Roboter zu verwenden, der über eine große Türöffnung herausgreift und ein Werkstück von einem Werkstücktransportband entnimmt oder ein Werkstück auf ein Werkstücktransportband auflädt.

Eine einfache Fördereinrichtung zur Beladung und Entladung der Reinigungsanlage mit Werkstücken ist auch aus US6215268 B1 bekannt. Als Alternative hierzu ist es auch bekannt, Drehtische einzusetzen, mittels welcher ein Werkstück über eine 180-Drehbewegung in die Reinigungsanlage hinein und aus der Reinigungsanlage heraus gefördert wird.

Die Taktzeit ist bei den vorstehend genannten Maschinenkonzepten jedoch häufig zu lang, weil zuviel Zeit für die Beladung und Entladung der Anlage mit den Werkstücken benötigt wird.

Der vorliegenden Erfindung liegt die Aufgabe zugrunde, eine Anlage zum Reinigen und/oder Entgraten von Werkstücken der vorstehend genannten Art zu schaffen, mit welcher ein hoher Werkstückdurchsatz bei gutem Reinigungs- und/oder Entgratungsergebnis erzielt wird.

Diese Aufgabe wird durch eine Anlage zum Reinigen und/oder Entgraten von Werkstücken nach Anspruch 1 gelöst.

Der vorliegenden Erfindung liegt somit das Konzept zugrunde, die Beladevorrichtung und/oder die Entladevorrichtung der Anlage zum Reinigen und/oder Entgraten von Werkstücken so auszubilden, dass parallel zu den Behandlungsvorgängen im Behandlungsbereich der Anlage eine Vorbehandlung eines Werkstücks in der Beladevorrichtung, vor der Behandlung des Werkstücks in dem Behandlungsbereich, und/oder eine Nachbehandlung eines Werkstücks in der Entladevorrichtung, nach der Behandlung des Werkstücks in dem Behandlungsbereich, stattfinden kann.

Im Vergleich zu einer Anlage, bei welcher ein erstes Werkstück nacheinander der Vorbehandlung, der Hauptbehandlung und der Nachbehandlung zugeführt wird, bevor das nächste Werkstück der Vorbehandlung zugeführt werden kann, wird bei der erfindungsgemäßen Anlage die Taktzeit optimal ausgenutzt, da gleichzeitig mit der Hauptbehandlung eines Werkstücks im Behandlungsbereich der Anlage eine Vorbehandlung eines anderen Werkstücks in der Beladevorrichtung und/oder eine Nachbehandlung eines weiteren Werkstücks in der Entladevorrichtung der Anlage durchführbar ist.

Durch eine Vorbehandlung in der Beladevorrichtung kann das Werkstück insbesondere bereits vorgereinigt werden, wodurch der Eintrag von Verschmutzungen in ein Reinigungsbad der Anlage reduziert und somit das Reinigungsergebnis verbessert werden kann.

Ferner kann die Standzeit eines Bades im Behandlungsbereich der Anlage verlängert werden.

Grundsätzlich kann die Beladevorrichtung der erfindungsgemäßen Anlage eine oder mehrere Behandlungsvorrichtungen beliebiger Art umfassen.

Vorzugsweise ist vorgesehen, dass die Beladevorrichtung als Behandlungsvorrichtung eine Spritzreinigungsvorrichtung, eine Trockenreinigungsvorrichtung und/oder eine Entgratungsvorrichtung, insbesondere eine Bürstentgratungsvorrichtung, umfasst.

Auch die Entladevorrichtung kann grundsätzlich eine oder mehrere Behandlungsvorrichtungen beliebiger Art umfassen.

Vorzugsweise ist vorgesehen, dass die Entladevorrichtung als Behandlungsvorrichtung eine Spülvorrichtung, eine Trocknungsvorrichtung und/oder eine Sauberkeitsüberprüfungsvorrichtung umfasst.

Durch eine Nachbehandlung eines Werkstücks in der Entladevorrichtung in Form eines Spülvorgangs wird das Reinigungsergebnis verbessert.

Alternativ oder ergänzend hierzu kann in der Entladevorrichtung eine Trocknung durchgeführt werden, bei der beispielsweise das Werkstück vor einem Vakuumtrocknungsvorgang durch Beaufschlagen mit Blasluft vorgetrocknet wird, wodurch das Trocknungsergebnis verbessert wird.

Alternativ oder ergänzend zu einer Reinigungs- oder Trocknungsbehandlung kann bei der Nachbehandlung in der Entladevorrichtung auch der erreichte Sauberkeitswert des Werkstückes geprüft werden.

Hierzu kann vorgesehen sein, dass in der Entladevorrichtung mindestens ein Sensor installiert ist, welcher die Sauberkeit des Werkstücks misst.

Alternativ oder ergänzend hierzu kann vorgesehen sein, dass die Entladevorrichtung eine Abspülvorrichtung zum Abspülen des Werkstücks mit einer Spülflüssigkeit umfasst und dass die Anlage eine Analysevorrichtung zum Analysieren des Verschmutzungsgrads der Spülflüssigkeit nach dem Abspülen des Werkstücks umfasst. Aus dem Verschmutzungsgrad der Spülflüssigkeit, nachdem mit derselben das Werkstück abgespült worden ist, kann auf die erreichte Sauberkeit des Werkstückes geschlossen werden.

Bei der erfindungsgemäßen Anlage ist vorgesehen, dass die Anlage eine interne Transportvorrichtung umfasst, mittels welcher das Werkstück von der Beladevorrichtung übernehmbar und der Behandlung in dem Behandlungsbereich zuführbar und nach der Behandlung in dem Behandlungsbereich der Entladevorrichtung zuführbar ist.

Die interne Transportvorrichtung ist als ein Roboter ausgebildet.

Die interne Transportvorrichtung weist mindestens fünf, beispielsweise mindestens sechs, Bewegungsfreiheitsgrade auf.

Ferner ist bei einer bevorzugten Ausgestaltung der Erfindung vorgesehen, dass die Anlage eine externe Transportvorrichtung umfasst, mittels welcher das Werkstück der Beladevorrichtung zuführbar und/oder von der Entladevorrichtung übernehmbar ist.

Eine solche externe Transportvorrichtung kann insbesondere ein Handhabungsgerät, beispielsweise einen Roboter, einen Portalkran ("Gantry") und/oder eine Rollenbahn umfassen.

Auch die externe Transportvorrichtung weist vorzugsweise mindestens drei, besonders bevorzugt mindestens vier, insbesondere mindestens fünf, beispielsweise mindestens sechs, Bewegungsfreiheitsgrade auf.

Mindestens eine Behandlungsvorrichtung der Beladevorrichtung und/oder mindestens eine Behandlungsvorrichtung der Entladevorrichtung kann stationär angeordnet sein.

In diesem Fall wird das Werkstück während der Vorbehandlung bzw. während der Nachbehandlung vorzugsweise mittels einer Werkstück-Bewegungsvorrichtung an der betreffenden Behandlungsvorrichtung der Beladevorrichtung bzw. der Entladevorrichtung vorbeibewegt.

Alternativ oder ergänzend hierzu kann auch vorgesehen sein, dass mindestens eine Behandlungsvorrichtung der Beladevorrichtung und/oder mindestens eine Behandlungsvorrichtung der Entladevorrichtung mit dem Werkstück während der Vorbehandlung bzw. während der Nachbehandlung mitbewegbar ist.

Um zu verhindern, dass Verunreinigungen und/oder Reinigungsmedium aus der Beladevorrichtung und/oder aus der Entladevorrichtung in den Außenraum der Anlage oder aus dem Außenraum der Anlage in die Beladevorrichtung und/oder in die Entladevorrichtung gelangen, ist es von Vorteil, wenn eine äußere Werkstück-Durchtrittsöffnung zwischen dem Außenraum der Anlage und der Beladevorrichtung und/oder eine äußere Werkstück-Durchtrittsöffnung zwischen dem Außenraum der Anlage und der Entladevorrichtung mittels einer Tür, insbesondere mittels einer Schott-Tür, verschließbar ist.

Um zu verhindern, dass Verunreinigungen und/oder Reinigungsmedium aus der Beladevorrichtung und/oder aus der Entladevorrichtung in den Behandlungsbereich der Anlage oder aus dem Behandlungsbereich der Anlage in die Beladevorrichtung und/oder in die Entladevorrichtung der Anlage gelangen, ist es ferner günstig, wenn eine innere Werkstück-Durchtrittsöffnung zwischen dem Behandlungsbereich der Anlage und der Beladevorrichtung und/oder eine innere Werkstück-Durchtrittsöffnung zwischen dem Behandlungsbereich der Anlage und der Entladevorrichtung mittels einer Tür, insbesondere mittels einer Schott-Tür, verschließbar ist.

Um das Werkstück durch die Beladevorrichtung zu dem Behandlungsbereich und/oder von dem Behandlungsbereich durch die Entladevorrichtung bewegen zu können, kann vorgesehen sein, dass die Beladevorrichtung und/oder die Entladevorrichtung eine lineare Werkstück-Bewegungseinrichtung umfasst.

Eine solche lineare Werkstück-Bewegungseinrichtung kann beispielsweise einen linear verfahrbaren Werkstück-Schlitten, eine Rollenbahn, ein Förderband und/oder einen Hubbalkenförderer umfassen.

Alternativ oder ergänzend hierzu kann auch vorgesehen sein, dass die Beladevorrichtung und/oder die Entladevorrichtung eine Drehvorrichtung zum Bewegen des Werkstücks umfasst.

Bei einer besonderen Ausgestaltung der Erfindung ist vorgesehen, dass der Beladevorrichtung und der Entladevorrichtung eine gemeinsame Drehvorrichtung zum Bewegen des Werkstücks vom Außenraum der Anlage in den Behandlungsbereich und vom Behandlungsbereich in den Außenraum der Anlage zugeordnet ist.

Mittels einer solchen gemeinsamen Drehvorrichtung kann der Transport des Werkstücks vom Außenraum in den Behandlungsbereich der Anlage und vom Behandlungsbereich der Anlage in deren Außenraum besonders einfach und mit besonders geringem apparativem Aufwand bewerkstelligt werden.

Dabei ist vorzugsweise vorgesehen, dass die Drehvorrichtung mindestens vier Arbeitspositionen für das Werkstück aufweist, in welche das Werkstück taktweise nacheinander bewegbar ist.

Dabei kann insbesondere eine erste Arbeitsposition für die Beladung der Drehvorrichtung mit dem Werkstück und für die Entnahme des Werkstücks von der Drehvorrichtung, eine zweite Arbeitsposition für die Durchführung der Vorbehandlung an dem Werkstück, eine dritte Arbeitsposition für die Entnahme des Werkstücks in den Behandlungsbereich, die Durchführung der Hauptbehandlung im Behandlungsbereich und die Rückführung des behandelten Werkstücks zu der Drehvorrichtung und eine vierte Arbeitsposition für die Durchführung der Nachbehandlung des Werkstücks vorgesehen sein.

Ferner ist es günstig, wenn die Drehvorrichtung mindestens vier Werkstückaufnahmen aufweist, die unabhängig voneinander mit Werkstücken belegt werden können.

Besonders günstig ist es, wenn die vier Werkstückaufnahmen durch Trennwände voneinander getrennt sind, so dass eine an einem der Werkstücke, welche an der Drehvorrichtung gehalten sind, durchgeführte Behandlung sich nicht auf die übrigen, gleichzeitig an der Drehvorrichtung gehaltenen Werkstücke auswirkt.

Die vorliegende Erfindung betrifft ferner ein Verfahren zum Reinigen und/oder Entgraten von Werkstücken, welches folgende Verfahrensschritte umfasst:
- Überführen eines Werkstücks aus einem Außenraum der Anlage in einen Behandlungsbereich der Anlage;
- Durchführen einer Reinigungsbehandlung und/oder einer Entgratungsbehandlung an dem Werkstück in dem Behandlungsbereich;
- Überführen des Werkstücks aus dem Behandlungsbereich der Anlage in den Außenraum der Anlage.

Der vorliegenden Erfindung liegt die weitere Aufgabe zugrunde, ein solches Verfahren zum Reinigen und/oder Entgraten von Werkstücken zu schaffen, mittels welchem ein hoher Werkstückdurchsatz bei gutem Reinigungs- bzw. Entgratungsergebnis erzielbar ist.

Diese Aufgabe wird durch ein Verfahren nach Anspruch 14 gelöst.

Der Begriff der Nachbehandlung des Werkstücks schließt dabei eine Erfassung des Behandlungserfolgs einer vorausgegangenen Behandlung ein.

Das erfindungsgemäße Verfahren kann insbesondere mittels der erfindungsgemäßen Anlage zum Reinigen und/oder Entgraten von Werkstücken durchgeführt werden.

Die erfindungsgemäße Anlage zum Reinigen und/oder Entgraten von Werkstücken kann vorzugsweise zur Durchführung des erfindungsgemäßen Verfahrens verwendet werden.

Weitere Merkmale und Vorteile der Erfindung sind Gegenstand der nachfolgenden Beschreibung und der zeichnerischen Darstellung von Ausführungsbeispielen.

In den Zeichnungen zeigen:

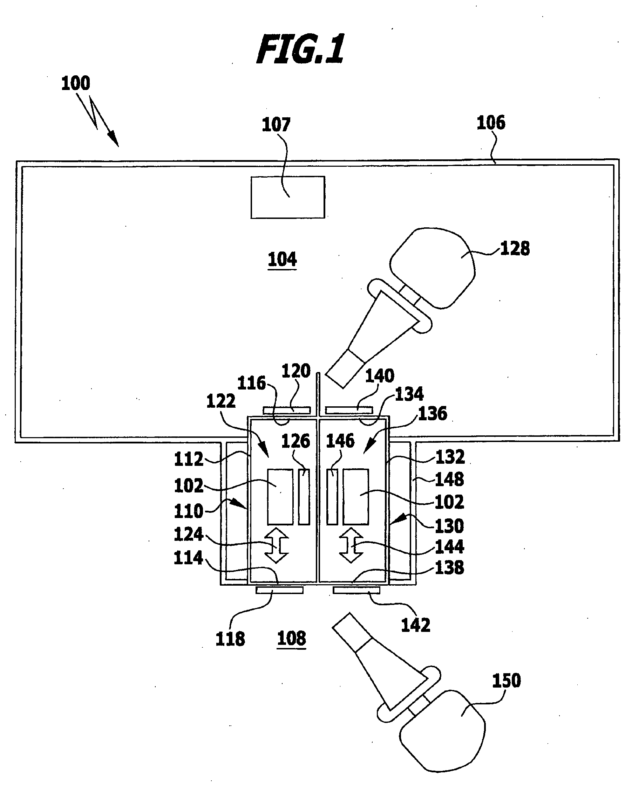

- Fig. 1: eine schematische Prinzipdarstellung einer Anlage zum Reinigen und/oder Entgraten von Werkstücken mit einem Behandlungsbereich, einer Beladevorrichtung zum Überführen von Werkstücken aus einem Außenraum der Anlage in den Behandlungsbereich und einer Entladevorrichtung zum Überführen von Werkstücken aus dem Behandlungsbereich in den Außenraum der Anlage, wobei die Beladevorrichtung und die Entladevorrichtung jeweils eine lineare Werkstück-Bewegungseinrichtung umfassen; und

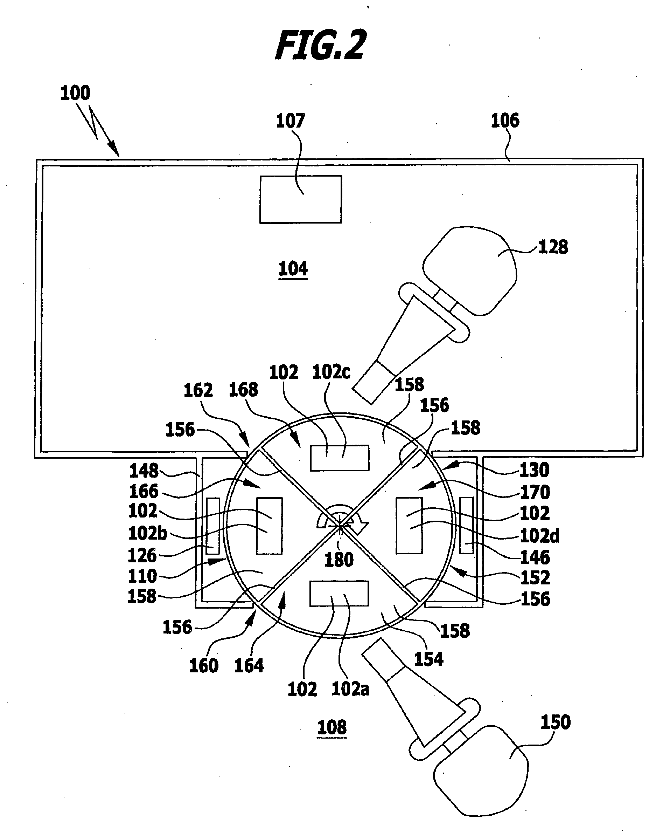

- Fig. 2: eine schematische Prinzipdarstellung einer zweiten Ausführungsform einer Anlage zum Reinigen und/oder Entgraten von Werkstücken, bei welcher der Beladevorrichtung und der Entladevorrichtung eine gemeinsame Drehvorrichtung zum Bewegen von Werkstücken vom Außenraum der Anlage in den Behandlungsbereich und vom Behandlungsbereich in den Außenraum der Anlage zugeordnet ist.

Gleiche oder funktional äquivalente Elemente sind in allen Figuren mit denselben Bezugszeichen bezeichnet.

Eine in Fig. 1 dargestellte erste Ausführungsform einer als Ganzes mit 100 bezeichneten Anlage zum Reinigen und/oder Entgraten von Werkstücken 102 umfasst einen Behandlungsbereich 104, der in einer Behandlungskammer 106 angeordnet ist und in dem mittels einer oder mehrerer (nicht dargestellter) Behandlungsvorrichtungen eine Reinigungs- und/oder eine Entgratungsbehandlung an den Werkstücken 102 durchführbar ist.

Zum Überführen jeweils eines Werkstücks 102 aus einem Außenraum 108 der Anlage 100 in den Behandlungsbereich 104 umfasst die Anlage 100 eine Beladevorrichtung 110 mit einer Beladekammer 112, die eine äußere Werkstück-Durchtrittsöffnung 114, durch welche ein Werkstück 102 vom Außenraum 108 in den Innenraum 122 der Beladekammer 112 überführbar ist, und eine innere Werkstück-Durchtrittsöffnung 116, durch welche ein Werkstück 102 aus dem Innenraum 122 der Beladekammer 112 in den Behandlungsbereich 104 überführbar ist, aufweist.

Die äußere Werkstück-Durchtrittsöffnung 114 ist mittels einer äußeren Tür 118 verschließbar, und die innere Werkstück-Durchtrittsöffnung 116 ist mittels einer inneren Tür 120 verschließbar.

Im Innenraum 122 der Beladekammer 112 ist eine lineare Werkstück-Bewegungseinrichtung angeordnet, mittels welcher ein Werkstück 102 durch den Innenraum 122 der Beladekammer 112 von der äußeren Werkstück-Durchtrittsöffnung 114 zu der inneren Werkstück-Durchtrittsöffnung 116 bewegbar ist. Diese lineare Werkstück-Bewegungseinrichtung der Beladevorrichtung 110 ist in Fig. 1 durch den Pfeil 124 symbolisiert.

Ferner umfasst die Beladevorrichtung 110 eine oder mehrere Behandlungsvorrichtungen 126, mittels welcher ein Werkstück 102 im Innenraum 122 der Beladekammer 112 während der Überführung zwischen dem Außenraum 108 und dem Behandlungsbereich 104, vor der Behandlung in dem Behandlungsbereich 104, vorbehandelbar ist.

Eine solche Behandlungsvorrichtung 126 der Beladevorrichtung 110 kann beispielsweise als eine Spritzreinigungsvorrichtung oder als eine Trockenreinigungsvorrichtung ausgebildet sein, so dass ein Werkstück 102 in der Beladekammer 112 einer Vorreinigung unterzogen werden kann, bevor das Werkstück 102 einem Hauptreinigungsvorgang und/oder einem Entgratungsvorgang in dem Behandlungsbereich 104 unterzogen wird.

Die Beladevorrichtung 110 kann alternativ oder ergänzend hierzu als Behandlungsvorrichtung 126 auch eine Entgratungsvorrichtung, insbesondere eine Bürstentgratungsvorrichtung, umfassen, so dass ein Werkstück 102 in der Beladekammer 112 einer Entgratung, insbesondere einer Bürstentgratung, unterzogen werden kann.

Im Behandlungsbereich 104 ist eine interne Transportvorrichtung 128 angeordnet, mittels welcher ein Werkstück 102 von der Beladevorrichtung 110 übernehmbar und der Behandlungsvorrichtung 107 in dem Behandlungsbereich 104 zuführbar ist.

Die interne Transportvorrichtung 128 kann insbesondere als ein Handhabungsgerät, beispielsweise ein. Roboter, ausgebildet sein.

Die Transportvorrichtung 128 weist mindestens fünf, beispielsweise mindestens sechs, Bewegungsfreiheitsgrade auf.

Nach der Behandlung in dem Behandlungsbereich 104 mittels der Behandlungsvorrichtung 107 ist das behandelte Werkstück 102 mittels der internen Transportvorrichtung 128 einer Entladevorrichtung 130 der Anlage 100 zuführbar.

Die Entladevorrichtung 130 umfasst eine Entladekammer 132 mit einer inneren Werkstück-Durchtrittsöffnung 134, durch welche ein Werkstück 102 aus dem Behandlungsbereich 104 in den Innenraum 136 der Entladekammer 132 überführbar ist, und eine äußere Werkstück-Durchtrittsöffnung 138, durch welche ein Werkstück 102 aus dem Innenraum 136 der Entladekammer 132 in den Außenraum 108 der Anlage 100 überführbar ist.

Die innere Werkstück-Durchtrittsöffnung 134 kann mittels einer inneren Tür 140 verschließbar sein, und die äußere Werkstück-Durchtrittsöffnung 138 kann mittels einer äußeren Tür 142 verschließbar sein.

Zum Bewegen eines Werkstücks 102 von der inneren Werkstück Durchtrittsöffnung 134 zu der äußeren Werkstück-Durchtrittsöffnung 138 umfasst die Entladevorrichtung 130 eine lineare Werkstück-Bewegungseinrichtung, die in Fig. 1 durch den Pfeil 144 symbolisiert ist.

Ferner sind im Innenraum 136 der Entladekammer 132 eine oder mehrere Behandlungsvorrichtungen 146 angeordnet, mittels welcher ein Werkstück 102 im Innenraum 136 der Entladekammer 132, nach der Behandlung in dem Behandlungsbereich 104, während der Überführung zwischen dem Behandlungsbereich 104 und dem Außenraum 108 der Anlage 100 nachbehandelbar ist.

Die Behandlungsvorrichtung 146 der Entladevorrichtung 130 kann beispielsweise als eine Spülvorrichtung, als eine Trocknungsvorrichtung und/oder als eine Sauberkeitsüberprüfungsvorrichtung ausgebildet sein.

Wenn die Behandlungsvorrichtung 146 als eine Sauberkeitsüberprüfungsvorrichtung ausgebildet ist, so kann vorgesehen sein, dass diese Sauberkeitsüberprüfungsvorrichtung eine Abspülvorrichtung zum Abspülen eines Werkstücks 102 mit einer Spülflüssigkeit umfasst.

Ferner umfasst die Anlage 100 in diesem Fall vorzugsweise eine (nicht dargestellte) Analysevorrichtung zum Analysieren des Verschmutzungsgrads der Spülflüssigkeit, mit welcher das Werkstück 102 abgespült worden ist, um aus dem Verschmutzungsgrad der Spülflüssigkeit auf die Restverschmutzung des Werkstücks 102 nach der Behandlung in dem Behandlungsbereich 104 schließen zu können.

Die Behandlungsvorrichtung 146 der Entladevorrichtung 130 kann im Innenraum 136 der Entladekammer 132 im Wesentlichen stationär angeordnet sein. Alternativ hierzu kann auch vorgesehen sein, dass die Behandlungsvorrichtung 146 zumindest teilweise mit dem Werkstück während der Nachbehandlung in den Entladekammer 132 mitbewegbar ist.

Die Entladevorrichtung 130 und die Beladevorrichtung 110 der Anlage 100 können in einem Be- und Entlade-Gehäuse 148 der Anlage 100 aufgenommen sein.

Ferner umfasst die Anlage 100 eine externe Transportvorrichtung 150, welche im Außenraum 108 der Anlage 100 angeordnet ist und mittels welcher ein Werkstück 102 der Beladevorrichtung 110 durch deren äußere Werkstück-Durchtrittsöffnung 114 zuführbar ist und mittels welcher ein Werkstück 102 von der Entladevorrichtung 130 durch deren äußere Werkstück-Durchtrittsöffnung 138 übernehmbar ist.

Die externe Transportvorrichtung 150 kann beispielsweise als ein Handhabungsgerät, insbesondere als ein Roboter, ausgebildet sein.

Die externe Transportvorrichtung 150 weist vorzugsweise mindestens drei, besonders bevorzugt mindestens vier, insbesondere mindestens fünf, beispielsweise mindestens sechs, Bewegungsfreiheitsgrade auf.

Die vorstehend beschriebene Anlage 100 zum Reinigen und/oder zum Entgraten von Werkstücken 102 funktioniert wie folgt:
Bei geöffneter äußerer Tür 118 an der äußeren Werkstück-Durchtrittsöffnung 114 der Beladevorrichtung 110 wird ein zu behandelndes Werkstück mittels der externen Transportvorrichtung 150 (beispielsweise von einem der Anlage 100 vorgeschalteten Werkstück-Fördersystem) aufgenommen und an der linearen Werkstück-Bewegungseinrichtung 124 der Beladevorrichtung 110 abgelegt.

Daraufhin wird die äußere Tür 118 (und gegebenenfalls auch die innere Tür 120) der Beladevorrichtung 110 geschlossen, und in einem ersten Arbeitstakt der Anlage 100 wird das Werkstück 102 an der Behandlungsvorrichtung 126 der Beladevorrichtung 110 vorbeigeführt.

Während der Bewegung des Werkstücks 102 mittels der linearen Werkstück-Bewegungseinrichtung 124 wird das Werkstück 102 vorbehandelt, beispielsweise vorgereinigt und/oder entgratet.

Das Reinigungsmedium für diese Vorreinigung und gegebenenfalls für die Entgratung kann von der Anlage 100 her über entsprechende Aggregate angeschlossen werden oder durch separate Aggregate für die Behandlungsvorrichtung 126 der Beladevorrichtung 110 aufbereitet werden.

Während dieses Arbeitstaktes der Anlage 100 wird ein zweites Werkstück 102 im Behandlungsbereich 104 behandelt, und ein drittes Werkstück 102 wird gleichzeitig in der Entladevorrichtung 130 einer Nachbehandlung unterzogen.

Am Ende des ersten Arbeitstaktes wird die behandlungsbereichseitige innere Tür 120 der Beladevorrichtung 110 geöffnet, und das Werkstück 102 wird von der internen Transportvorrichtung 128 der Anlage 100 aus der Beladevorrichtung 110 aufgenommen, durch die innere Werkstück-Durchtrittsöffnung 116 in den Behandlungsbereich 104 überführt und der weiteren Behandlung mittels der Behandlungsvorrichtung 107 in einem zweiten Arbeitstakt zugeführt.

Diese Hauptbehandlung im Behandlungsbereich 104 kann beispielsweise ein Hochdruckentgratungsvorgang und/oder ein Reinigungsvorgang sein.

Während dieses zweiten Arbeitstaktes wird gleichzeitig ein weiteres Werkstück 102 in der Entladevorrichtung 130 einer Nachbehandlung und ein neues Werkstück 102 in der Beladevorrichtung 110 einer Vorbehandlung unterzogen. Nach der Behandlung im Behandlungsbereich 104 wird das Werkstück 102 von der internen Transportvorrichtung 128 an der linearen Werkstück-Bewegungseinrichtung 144 der Entladevorrichtung 130 abgelegt, nachdem die innere Tür 140 der Entladevorrichtung 130 an der inneren Werkstück-Durchtrittsöffnung 134 geöffnet worden ist.

Nach dem Schließen der inneren Tür 140 beginnt der dritte Arbeitstakt an dem Werkstück 102.

Während das Werkstück 102 in der Entladekammer 132 mittels der linearen Werkstück-Bewegungseinrichtung 144 an der Behandlungsvorrichtung 146 der Entladevorrichtung 130 vorbeibewegt wird, wird eine Nachbehandlung an dem Werkstück 102 mittels der Behandlungsvorrichtung 146 durchgeführt.

Diese Nachbehandlung kann beispielsweise ein Spülvorgang, ein Trocknungsvorgang oder ein Sauberkeitsüberprüfungsvorgang an dem Werkstück 102 sein.

Während dieses dritten Arbeitstaktes der Anlage 100 wird gleichzeitig ein anderes Werkstück 102 im Behandlungsbereich 104 der Hauptbehandlung und ein weiteres Werkstück 102 in der Beladevorrichtung 110 einer Vorbehandlung unterzogen.

Am Ende des dritten Arbeitstaktes wird die äußere Tür 142 der Entladevorrichtung 130 geöffnet, und das Werkstück 102 wird mittels der externen Transportvorrichtung 150 durch die äußere Werkstück-Durchtrittsöffnung 138 der Entladevorrichtung 130 entnommen und im Außenraum 108 abgesetzt, um von einem der Anlage 100 nachgeschalteten Werkstück-Fördersystem übernommen zu werden.

Dadurch, dass während der Hauptprozesszeit im Behandlungsbereich 104 der Anlage 100 gleichzeitig ein anderes Werkstück 102 in der Beladevorrichtung 110 vorbehandelt und ein weiteres Werkstück 102 in der Entladevorrichtung 130 nachbehandelt wird, werden die Taktzeiten der Anlage 100 optimal ausgenutzt, und das Reinigungsergebnis wird verbessert.

Eine in Fig. 2 dargestellte zweite Ausführungsform einer Anlage 100 zum Reinigen und/oder zum Entgraten von Werkstücken 102 unterscheidet sich von der in Fig. 1 dargestellten ersten Ausführungsform dadurch, dass der Beladevorrichtung 110 und der Entladevorrichtung 130 statt jeweils einer linearen Werkstück-Bewegungseinrichtung 124 bzw. 144 eine gemeinsame Drehvorrichtung 152 zum Bewegen von Werkstücken 102 vom Außenraum 108 der Anlage 100 in den Behandlungsbereich 104 und vom Behandlungsbereich 104 in den Außenraum 108 der Anlage 100 zugeordnet ist.

Die Drehvorrichtung 152 umfasst einen kreisförmigen Drehtisch 154, welcher durch Trennwände 156 in mehrere, beispielsweise vier, Segmente 158 aufgeteilt ist, welche jeweils ein Werkstück 102 aufnehmen können.

Der Drehtisch 154 ist um eine vorzugsweise vertikal ausgerichtete Drehachse 180 drehbar, mittels einer (nicht dargestellten) motorischen Drehantriebsvorrichtung .

In jedem Arbeitstakt der Anlage 100 dreht sich der Drehtisch 154 um einen Winkel von jeweils 360°/n weiter, wobei n der Anzahl der Segmente 158 des Drehtisches 154 entspricht.

Wenn vier Segmente 158 vorhanden sind, dreht sich der Drehtisch 154 bei jedem Arbeitstakt also um jeweils 90° weiter.

Die Drehvorrichtung 152 ist in einem Be- und Entlade-Gehäuse 148 der Anlage 100 angeordnet, welches eine äußere Werkstück-Durchtrittsöffnung 160, durch welche sich jeweils ein Segment 158 der Drehvorrichtung 152 in den Außenraum 108 der Anlage 100 erstreckt, und eine innere Werkstück-Durchtrittsöffnung 162, durch welche sich jeweils ein Segment 158 der Drehvorrichtung 152 in den Behandlungsbereich 104 der Anlage 100 erstreckt, aufweist.

Ferner sind in dem Be- und Entlade-Gehäuse 148 eine Behandlungsvorrichtung 126 der Beladevorrichtung 110 und eine Behandlungsvorrichtung 146 der Entladevorrichtung 130 angeordnet.

Im Übrigen stimmt die in Fig. 2 dargestellte zweite Ausführungsform hinsichtlich ihres Aufbaus mit der in Fig. 1 dargestellten ersten Ausführungsform einer Anlage 100 zum Reinigen und/oder zum Entgraten von Werkstücken 102 überein.

Die zweite Ausführungsform einer Anlage 100 funktioniert wie folgt:
In einem ersten Arbeitstakt wird ein erstes Werkstück 102a mittels der externen Transportvorrichtung 150 an dem sich in einer ersten Arbeitsposition im Bereich der äußeren Werkstück-Durchtrittsöffnung 160 befindlichen Segment 158 der Drehvorrichtung 152 abgelegt, nachdem während desselben Arbeitstaktes ein bereits behandeltes Werkstück 102 von diesem Segment 158 mittels der externen Transportvorrichtung 150 von der Drehvorrichtung 152 abgenommen und im Außenraum 108 der Anlage 100 abgesetzt worden ist,
um anschließend von einem der Anlage 100 nachgeschalteten Werkstück-Fördersystem übernommen zu werden.

Während dieses ersten Arbeitstaktes wird gleichzeitig ein zweites Werkstück 102b in einer zweiten Arbeitsposition 166 mittels der Behandlungsvorrichtung 126 der Beladevorrichtung 110 vorbehandelt, ein drittes Werkstück 102c in einer dritten Arbeitsposition 168 mittels der internen Transportrichtung 128 von der Drehvorrichtung 152 abgenommen und der Hauptbehandlung im Behandlungsbereich 104 zugeführt und anschließend wieder an der Drehvorrichtung 152 abgesetzt und ein viertes Werkstück 102d in einer vierten Arbeitsposition 170 mittels der Behandlungsvorrichtung 146 der Entladevorrichtung 130 nachbehandelt.

Anschließend wird die Drehvorrichtung 152 um den Taktwinkel von beispielsweise 90° weiter gedreht.

Im darauffolgenden zweiten Arbeitstakt wird das erste Werkstück 102a an der zweiten Arbeitsposition 166 mittels der Behandlungsvorrichtung 126 der Beladevorrichtung 110 vorbehandelt.

Diese Vorbehandlung kann beispielsweise eine Vorreinigung und/oder eine Entgratung, insbesondere eine Bürstentgratung, des Werkstücks 102a sein.

Die Vorreinigung kann mit einem in dem Be- und Entlade-Gehäuse 148 fest angeordneten Reinigungssystem durchgeführt werden.

Das für die Vorreinigung oder gegebenenfalls für die Entgratung verwendete Reinigungsmedium kann von der Anlage 100 über entsprechende Aggregate angeschlossen werden oder durch separate Aggregate für die Behandlungsvorrichtung 126 der Beladevorrichtung 110 gesondert aufbereitet werden.

Während der Vorbehandlung des Werkstücks 102a in der zweiten Arbeitsposition 166 wird gleichzeitig das zweite Werkstück 102b der Hauptbehandlung im Behandlungsbereich 104 unterzogen, das dritte Werkstück 102c an der vierten Arbeitsposition 170 nachbehandelt und das vierte Werkstück 102d an der ersten Arbeitsposition 164 von der Drehvorrichtung 152 mittels der externen Transportvorrichtung 150 abgenommen und durch ein neues Werkstück 102 ersetzt.

Anschließend wird die Drehvorrichtung 152 um den Taktwinkel von beispielsweise 90° weitergedreht.

Im nun folgenden dritten Arbeitstakt wird das erste Werkstück 102a in der dritten Arbeitsposition 168 mittels der internen Transportvorrichtung 128 von der Drehvorrichtung 152 abgenommen und der Behandlungsvorrichtung 107 im Behandlungsbereich 104 der Anlage 100 zugeführt, um einer Hauptbehandlung, beispielsweise einer Hochdruckentgratung und/oder einer Reinigung, unterzogen zu werden.

Nach Abschluss der Hauptbehandlung im Behandlungsbereich 104 wird das behandelte Werkstück 102a mittels der internen Transportvorrichtung 128 wieder an der Drehvorrichtung 152 abgesetzt.

Während desselben Arbeitstaktes wird das zweite Werkstück 102b an der vierten Arbeitsposition 170 nachbehandelt, während das dritte Werkstück 102c in der ersten Arbeitsposition mittels der externen Transportvorrichtung 150 von der Drehvorrichtung 152 abgenommen und durch ein neues Werkstück 102 ersetzt wird.

Ferner wird in demselben Arbeitstakt ein weiteres Werkstück 102 an der zweiten Arbeitsposition 166 vorbehandelt.

Anschließend wird die Drehvorrichtung 152 um den Taktwinkel von beispielsweise 90° weitergedreht.

Im nun folgenden vierten Arbeitstakt wird an dem ersten Werkstück 102a in der vierten Arbeitsposition 170 eine Nachbehandlung mittels der Behandlungsvorrichtung 146 der Entladevorrichtung 130 durchgeführt.

Diese Nachbehandlung kann beispielsweise eine Nachreinigung mittels eines Reinigungssystems oder eine Trocknung mittels eines Blassystems sein. Während das erste Werkstück 102a an der vierten Arbeitsposition 170 nachbehandelt wird, wird im selben Arbeitstakt das zweite Werkstück 102b mittels der externen Transportvorrichtung 150 in der ersten Arbeitsposition 164 von der Drehvorrichtung 152 abgenommen und durch ein neues Werkstück 102 ersetzt.

Ein anderes Werkstück 102 wird im selben Arbeitstakt an der zweiten Arbeitsposition 166 vorbehandelt, und ein weiteres Werkstück 102 wird im selben Arbeitstakt im Behandlungsbereich 104 der Hauptbehandlung unterzogen.

Anschließend wird die Drehvorrichtung 152 um den Taktwinkel von beispielsweise 90° weitergedreht, und die Anlage 100 befindet sich wieder im ersten Arbeitstakt, in welchem das erste Werkstück 102a mittels der externen Transportvorrichtung 150 von der Drehvorrichtung 152 abgenommen und durch ein neues Werkstück 102 ersetzt wird.

Im selben Arbeitstakt wird ein Werkstück 102 an der zweiten Arbeitsposition 166 vorbehandelt, ein anderes Werkstück 102 im Behandlungsbereich 104 der Hauptbehandlung unterzogen und schließlich ein weiteres Werkstück 102 an der vierten Arbeitsposition nachbehandelt.

Dadurch, dass zeitgleich mit der Durchführung der Hauptbehandlung an einem Werkstück 102 im Behandlungsbereich 104 ein anderes Werkstück 102 vorbehandelt und ein weiteres Werkstück 102 nachbehandelt wird, werden die Taktzeiten der Anlage 100 optimal ausgenutzt, und das Reinigungsergebnis wird verbessert.

## Patentansprüche

1. Anlage zum Reinigen und/oder Entgraten von Werkstücken (102), umfassend
einen Behandlungsbereich (104), in dem eine Reinigungsbehandlung und/oder eine Entgratungsbehandlung an einem Werkstück (102) durchführbar ist,
eine Beladevorrichtung (110) zum Überführen des Werkstücks (102) aus einem Außenraum (108) der Anlage (100) in den Behandlungsbereich (104) und
eine Entladevorrichtung (130) zum Überführen des Werkstücks (102) aus dem Behandlungsbereich (104) in den Außenraum (108) der Anlage (100),
wobei die Beladevorrichtung (110) und/oder die Entladevorrichtung (130) mindestens eine Behandlungsvorrichtung (126, 146) umfasst, mittels welcher das Werkstück (102) während der Überführung zwischen dem Außenraum (108) der Anlage (100) und dem Behandlungsbereich (104) der Anlage (100) behandelbar ist,
wobei die Anlage (100) eine im Behandlungsbereich (104) angeordnete interne Transportvorrichtung (128) umfasst, mittels welcher das Werkstück (102) von der Beladevorrichtung (110) übernehmbar und der Behandlung in dem Behandlungsbereich (104) zuführbar und nach der Behandlung in dem Behandlungsbereich (104) der Entladevorrichtung (130) zuführbar ist, und
wobei die interne Transportvorrichtung (128) als ein Roboter ausgebildet ist,
**dadurch gekennzeichnet,**
**dass** die interne Transportvorrichtung (128) mindestens fünf Bewegungsfreiheitsgrade aufweist.

2. Anlage nach Anspruch 1, **dadurch gekennzeichnet, dass** die Beladevorrichtung (110) als Behandlungsvorrichtung (126) eine Spritzreinigungsvorrichtung, eine Trockenreinigungsvorrichtung und/oder eine Entgratungsvorrichtung umfasst.

3. Anlage nach einem der Ansprüche 1 oder 2, **dadurch gekennzeichnet, dass** die Entladevorrichtung (130) als Behandlungsvorrichtung (146) eine Spülvorrichtung, eine Trocknungsvorrichtung und/oder eine Sauberkeitsüberprüfungsvorrichtung umfasst.

4. Anlage nach einem der Ansprüche 1 bis 3, **dadurch gekennzeichnet, dass** die Entladevorrichtung (130) eine Abspülvorrichtung zum Abspülen des Werkstücks (102) mit einer Spülflüssigkeit umfasst und die Anlage (100) eine Analysevorrichtung zum Analysieren des Verschmutzungsgrads der Spülflüssigkeit nach dem Abspülen des Werkstücks (102) umfasst.

5. Anlage nach einem der Ansprüche 1 bis 4, **dadurch gekennzeichnet, dass** die Anlage (100) eine externe Transportvorrichtung (15) umfasst, mittels welcher das Werkstück (102) der Beladevorrichtung (110) zuführbar und/oder von der Entladevorrichtung (130) übernehmbar ist.

6. Anlage nach einem der Ansprüche 1 bis 5, **dadurch gekennzeichnet, dass** mindestens eine Behandlungsvorrichtung (126, 146) der Beladevorrichtung (110) und/oder der Entladevorrichtung (130) stationär angeordnet ist.

7. Anlage nach einem der Ansprüche 1 bis 6, **dadurch gekennzeichnet, dass** mindestens eine Behandlungsvorrichtung (126, 146) der Beladevorrichtung (110) und/oder der Entladevorrichtung (130) mit dem Werkstück (102) während der Behandlung mitbewegbar ist.

8. Anlage nach einem der Ansprüche 1 bis 7, **dadurch gekennzeichnet, dass** eine äußere Werkstück-Durchtrittsöffnung (114) zwischen dem Außenraum (108) der Anlage (100) und der Beladevorrichtung (110) und/oder eine äußere Werkstück-Durchtrittsöffnung (138) zwischen dem Außenraum (108) der Anlage (100) und der Entladevorrichtung (130) mittels einer Tür (118, 142) verschließbar ist.

9. Anlage nach einem der Ansprüche 1 bis 8, **dadurch gekennzeichnet, dass** eine innere Werkstück-Durchtrittsöffnung (116) zwischen dem Behandlungsbereich (104) der Anlage (100) und der Beladevorrichtung (110) und/oder eine innere Werkstück-Durchtrittsöffnung (134) zwischen dem Behandlungsbereich (104) der Anlage (100) und der Entladevorrichtung (130) mittel einer Tür (120, 140) verschließbar ist.

10. Anlage nach einem der Ansprüche 1 bis 9, **dadurch gekennzeichnet, dass** die Beladevorrichtung (110) und/oder die Entladevorrichtung (130) eine lineare Werkstück-Bewegungseinrichtung (124, 144) umfasst.

11. Anlage nach einem der Ansprüche 1 bis 10, **dadurch gekennzeichnet, dass** die Beladevorrichtung (110) und/oder die Entladevorrichtung (130) eine Drehvorrichtung (152) zum Bewegen des Werkstücks (102) umfasst.

12. Anlage nach einem der Ansprüche 1 bis 11, **dadurch gekennzeichnet, dass** der Beladevorrichtung (110) und der Entladevorrichtung (130) eine gemeinsame Drehvorrichtung (152) zum Bewegen des Werkstücks (102) vom Außenraum (108) der Anlage (100) in den Behandlungsbereich (104) und vom Behandlungsbereich (104) in den Außenraum (108) der Anlage (100) zugeordnet ist.

13. Anlage nach Anspruch 12, **dadurch gekennzeichnet, dass** die Drehvorrichtung (152) mindestens vier Arbeitspositionen (164, 166, 168, 170) für das Werkstück (102) aufweist, in welche das Werkstück (102) taktweise nacheinander bewegbar ist.

14. Verfahren zum Reinigen und/oder Entgraten von Werkstücken mittels einer Anlage (100), umfassend folgende Verfahrensschritte:
- Überführen eines Werkstücks (102) aus einem Außenraum (108) der Anlage (100) in einen Behandlungsbereich (104) der Anlage (100) mittels einer Beladevorrichtung (110);
- Durchführen einer Reinigungsbehandlung und/oder einer Entgratungsbehandlung an dem Werkstück (102) in dem Behandlungsbereich (104);
- Überführen des Werkstücks (102) aus dem Behandlungsbereich (104) der Anlage (100) in den Außenraum (108) der Anlage (100) mittels einer Entladevorrichtung (130),
wobei das Werkstück (102) während des Überführens von dem Außenraum (108) der Anlage (100) in den Behandlungsbereich (104) der Anlage (100) mittels einer Behandlungsvorrichtung (126) der Beladevorrichtung (110) vorbehandelt und/oder während des Überführens von dem Behandlungsbereich (104) der Anlage (100) in den Außenraum (108) der Anlage (100) mittels einer Behandlungsvorrichtung (146) der Entladevorrichtung (130) nachbehandelt wird,
wobei die Anlage (100) eine im Behandlungsbereich (104) angeordnete interne Transportvorrichtung (128) umfasst, mittels welcher das Werkstück (102) von der Beladevorrichtung (110) übernommen wird und der Behandlung in dem Behandlungsbereich (104) zugeführt wird und nach der Behandlung in dem Behandlungsbereich (104) der Entladevorrichtung (130) zugeführt wird, und
wobei die interne Transportvorrichtung (128) als ein Roboter ausgebildet ist,
**dadurch gekennzeichnet,**
**dass** die interne Transportvorrichtung (128) mindestens fünf Bewegungsfreiheitsgrade aufweist.

## Claims

1. Installation for cleaning and/or deburring workpieces (102), comprising a treatment region (104) configured to enable a cleaning treatment and/or a deburring treatment to be performed on a workpiece (102) therein,
a loading device (110) for transferring the workpiece (102) from an outer area (108) of the installation (100) into the treatment region (104) and
an unloading device (130) for transferring the workpiece (102) from the treatment region (104) into the outer area (108) of the installation (100),
wherein the loading device (110) and/or the unloading device (130) comprises at least one treatment device (126, 146) configured to enable the workpiece (102) to be treated during the transfer between the outer area (108) of the installation (100) and the treatment region (104) of the installation (100),
wherein the installation (100) comprises an internal transport device (128) arranged in the treatment region (104) and configured to enable the workpiece (102) to be taken up by the loading device (110) and delivered to the treatment operation in the treatment region (104) and delivered to the unloading device (130) after the treatment in the treatment region (104), and
wherein the internal transport device (128) is configured as a robot,
**characterised in that**
the internal transport device (128) has at least five degrees of freedom of movement .

2. Installation according to claim 1, **characterised in that** the loading device (110) comprises as treatment device (126) a spray cleaning device, a dry cleaning device and/or a deburring device.

3. Installation according to one of claims 1 or 2, **characterised in that** the unloading device (130) comprises as treatment device (146) a flushing device, a drying device and/or a cleanness checking device.

4. Installation according to one of claims 1 to 3, **characterised in that** the unloading device (130) comprises a rinsing device for rinsing off the workpiece (102) with a flushing liquid and the installation (100) comprises an analysing device for analysing the degree of contamination of the flushing liquid after rinsing off the workpiece (102).

5. Installation according to one of claims 1 to 4, **characterised in that** the installation (100) comprises an external transport device (15) configured to enable the workpiece (102) to be delivered to the loading device (110) and/or to be accepted from the unloading device (130).

6. Installation according to one of claims 1 to 5, **characterised in that** at least one treatment device (126, 146) of the loading device (110) and/or the unloading device (130) is static.

7. Installation according to one of claims 1 to 6, **characterised in that** at least one treatment device (126, 146) of the loading device (110) and/or the unloading device (130) is movable with the workpiece (102) during the treatment.

8. Installation according to one of claims 1 to 7, **characterised in that** an outer workpiece passage (114) between the outer area (108) of the installation (100) and the loading device (110) and/or an outer workpiece passage (138) between the outer area (108) of the installation (100) and the unloading device (130) is closable by means of a door (118, 142).

9. Installation according to one of claims 1 to 8, **characterised in that** an inner workpiece passage (116) between the treatment region (104) of the installation (100) and the loading device (110) and/or an inner workpiece passage (134) between the treatment region (104) of the installation (100) and the unloading device (130) is closable by means of a door (120, 140).

10. Installation according to one of claims 1 to 9, **characterised in that** the loading device (110) and/or the unloading device (130) comprises a linear workpiece movement device (124, 144).

11. Installation according to one of claims 1 to 10, **characterised in that** the loading device (110) and/or the unloading device (130) comprises a rotation device (152) for moving the workpiece (102).

12. Installation according to one of claims 1 to 11, **characterised in that** the loading device (110) and the unloading device (130) have an associated common rotation device (152) for moving the workpiece (102) from the outer area (108) of the installation (100) into the treatment region (104) and from the treatment region (104) into the outer area (108) of the installation (100).

13. Installation according to claim 13, **characterised in that** the rotation device (152) has at least four working positions (164, 166, 168, 170) for the workpiece (102), into which the workpiece (102) is movable in consecutive cycles.

14. Method for cleaning and/or deburring workpieces by means of an installation (100), comprising the following method steps:
• transferring a workpiece (102) from an outer area (108) of the installation (100) into a treatment region (104) of the installation (100) by means of a loading device (110);
• conducting a cleaning treatment and/or a deburring treatment on the workpiece (102) in the treatment region (104);
• transferring the workpiece (102) from the treatment region (104) of the installation (100) into the outer area (108) of the installation (100) by means of an unloading device (130),
wherein the workpiece (102) is pretreated during the transfer from the outer area (108) of the installation (100) into the treatment region (104) of the installation (100) by means of a treatment device (126) of the loading device (110) and/or is aftertreated during the transfer from the treatment region (104) of the installation (100) into the outer area (108) of the installation (100) by means of a treatment device (146) of the unloading device (130),
wherein the installation (100) comprises an internal transport device (128) arranged in the treatment region (104) and by means of which the workpiece (102) is taken up by the loading device (110) and is delivered to the treatment operation in the treatment region (104) and is delivered to the unloading device (130) after the treatment in the treatment region (104), and
wherein the internal transport device (128) is configured as a robot,
**characterised in that**
the internal transport device (128) has at least five degrees of freedom of movement .

## Revendications

1. Installation de nettoyage et/ou d'ébavurage de pièces (102), comprenant
une zone de traitement (104), dans laquelle peut être effectué un traitement de nettoyage et/ou un traitement d'ébavurage sur une pièce (102),
un dispositif de chargement (110) pour le transfert de la pièce (102) d'un espace extérieur (108) de l'installation (100) vers la zone de traitement (104) et
un dispositif de déchargement (130) pour le transfert de la pièce (102) de la zone de traitement (104) vers l'espace extérieur (108) de l'installation (100),
dans laquelle le dispositif de chargement (110) et/ou le dispositif de déchargement (130) comprennent au moins un dispositif de traitement (126, 146), au moyen duquel la pièce (102) peut être traitée pendant le transfert entre l'espace extérieur (108) de l'installation (100) et la zone de traitement (104) de l'installation (100),
dans laquelle l'installation (100) comprend un dispositif de transport interne (128) agencé dans la zone de traitement (104), au moyen duquel la pièce (102) peut être reçue du dispositif de chargement (110) et être conduite vers le traitement dans la zone de traitement (104) et vers le dispositif de déchargement (130) après traitement dans la zone de traitement (104), et
dans laquelle le dispositif de transport interne (128) est conçu comme un robot,
**caractérisée**
**en ce que** le dispositif de transport interne (128) présente au moins cinq degrés de liberté de déplacement.

2. Installation selon la revendication 1, **caractérisée en ce que** le dispositif de chargement (110) comprend un dispositif de nettoyage par jet, un dispositif de nettoyage à sec et/ou un dispositif d'ébavurage en tant que dispositif de traitement (126).

3. Installation selon la revendication 1 ou 2, **caractérisée en ce que** le dispositif de déchargement (130) comprend un dispositif de lavage, un dispositif de séchage et/ou un dispositif de contrôle de propreté en tant que dispositif de traitement (146).

4. Installation selon l'une des revendications 1 à 3, **caractérisée en ce que** le dispositif de déchargement (130) comprend un dispositif de rinçage pour le rinçage de la pièce (102) avec un liquide de rinçage, et l'installation (100) comprend un dispositif d'analyse pour l'analyse du degré de pollution par la saleté du liquide de rinçage après le rinçage de la pièce (102).

5. Installation selon l'une des revendications 1 à 4, **caractérisée en ce que** l'installation (100) comprend un dispositif de transport externe (15), au moyen duquel la pièce (102) peut être conduite vers le dispositif de chargement (110) et/ou être reçue du dispositif de déchargement (130).

6. Installation selon l'une des revendications 1 à 5, **caractérisée en ce qu'**au moins un dispositif de traitement (126, 146) du dispositif de chargement (110) et/ou du dispositif de déchargement (130) est agencé de manière fixe.

7. Installation selon l'une des revendications 1 à 6, **caractérisée en ce qu'**au moins un dispositif de traitement (126, 146) du dispositif de chargement (110) et/ou du dispositif de déchargement (130) peut être déplacé avec la pièce (102) pendant le traitement.

8. Installation selon l'une des revendications 1 à 7, **caractérisée en ce qu'**une ouverture de passage de pièce extérieure (114) entre l'espace extérieur (108) de l'installation (100) et le dispositif de chargement (110) et/ou une ouverture de passage de pièce extérieure (138) entre l'espace extérieur (108) de l'installation (100) et le dispositif de déchargement (130) est obturable au moyen d'une porte (118, 142).

9. Installation selon l'une des revendications 1 à 8, **caractérisée en ce qu'**une ouverture de passage de pièce intérieure (116) entre la zone de traitement (104) de l'installation (100) et le dispositif de chargement (110) et/ou une ouverture de passage de pièce intérieure (134) entre la zone de traitement (104) de l'installation (100) et le dispositif de déchargement (130) est obturable au moyen d'une porte (120, 140).

10. Installation selon l'une des revendications 1 à 9, **caractérisée en ce que** le dispositif de chargement (110) et/ou le dispositif de déchargement (130) comprend un dispositif de déplacement linéaire de pièce (124, 144).

11. Installation selon l'une des revendications 1 à 10, **caractérisée en ce que** le dispositif de chargement (110) et/ou le dispositif de déchargement (130) comprend un dispositif d'entraînement en rotation (152) pour le déplacement de la pièce (102).

12. Installation selon l'une des revendications 1 à 11, **caractérisée en ce qu'**au dispositif de chargement (110) et au dispositif de déchargement (130) est associé un dispositif d'entraînement en rotation (152) commun pour le déplacement de la pièce (102) de l'espace extérieur (108) de l'installation (100) vers la zone de traitement (104), et de la zone de traitement (104) vers l'espace extérieur (108) de l'installation (100).

13. Installation selon la revendication 12, **caractérisée en ce que** le dispositif d'entraînement en rotation (152) présente au moins quatre positions de travail (164, 166, 168, 170) pour la pièce (102), vers lesquelles la pièce (102) est déplaçable successivement de manière cyclique.

14. Procédé de nettoyage et/ou d'ébavurage de pièces au moyen d'une installation (100), comprenant les étapes de procédé suivantes :
- transfert d'une pièce (102) d'un espace extérieur (108) de l'installation (100) vers une zone de traitement (104) de l'installation (100) au moyen d'un dispositif de chargement (110) ;
- exécution d'un traitement de nettoyage et/ou d'un traitement d'ébavurage sur la pièce (102) dans la zone de traitement (104) ;
- transfert de la pièce (102) de la zone de traitement (104) de l'installation (100) vers l'espace extérieur (108) de l'installation (100) au moyen d'un dispositif de déchargement (130),
dans lequel la pièce (102) subit un pré-traitement pendant le transfert de l'espace extérieur (108) de l'installation (100) vers la zone de traitement (104) de l'installation (100) au moyen d'un dispositif de traitement (126) du dispositif de chargement (110) et/ou subit un post-traitement pendant le transfert de la zone de traitement (104) de l'installation (100) vers l'espace extérieur (108) de l'installation (100) au moyen d'un dispositif de traitement (146) du dispositif de déchargement (130),
dans lequel l'installation (100) comprend un dispositif de transport interne (128) agencé dans la zone de traitement (104), au moyen duquel la pièce (102) est reçue du dispositif de chargement (110) et est conduite vers le traitement dans la zone de traitement (104) et vers le dispositif de déchargement (130) après traitement dans la zone de traitement (104), et
dans lequel le dispositif de transport interne (128) est conçu comme un robot,
**caractérisé**
**en ce que** le dispositif de transport interne (128) présente au moins cinq degrés de liberté de déplacement.
